# EUROPEAN PATENT APPLICATION

(11) **EP 1 095 973 A1**
(43) Date of publication of application: **02.05.2001**
(21) Application number: 99121244.0
(22) Date of filing: 25.10.1999
(51) Int. Cl.: C08K 5/20, F16K 1/30

(54) **Rubber compound for gas valves**

(71) Applicant: HONEYWELL B.V., 1101 EA Amsterdam Z.O. (NL)
(72) Inventor: Feitsma, Jan Louw, 7891 TL Klazienaveen (NL); Eggink, Roelof Geert, 7681 CN Vroomshoop (NL)
(74) Representative: Herzbach, Dieter, Dipl.-Ing.

(57) **Abstract**

The invention relates to a rubber compound for a closing element of a gas valve.

In order to provide a closing element of a gas valve having high sealing levels and low sticking levels, the rubber compound comprises an anti-block and slip additive, especially a fatty bisamide ingredient.

## Description

The invention relates to a rubber compound for a closing element of a gas valve. Furthermore, the invention relates to a gas valve.

Gas valves usually comprise a closing element made of a rubber compound, whereby said closing element acts against a valve seat made of metal or plastic.

For a faultless operation of gas valves, the following aspects are of importance: In case of a closed gas valve the rubber compound of the closing element and the metal or plastic valve seat have to provide a sealed interaction. This means that the rubber compound should have a high sealing level. In case of a heat demand the gas valve has to open immediately and as a consequence the rubber compound of the closing element should have a low sticking level to the metal or plastic valve seat.

The gas valves known from the prior art comprise a closing element made of a rubber compound providing said high sealing level or said low sticking level. However, no gas valve is known from the prior art providing both properties.

It is therefore an object of the invention to provide a rubber compound for a closing element of a gas valve having a high sealing level and a low sticking level in connection with a metal or plastic valve seat.

The rubber compound according to the invention comprises the features of Claim 1. The gas valve according to the invention comprises the features according to Claim 8.

Rubber compounds known from the prior art usually comprise the following ingredients:
A.) A base elastomer, e.g. Perbuna NT (available from the company Bayer);
B.) A vulcanisation system, e.g. Sulphur Rhenocure S (available from the company Rhein Chemie);
C.) An activator, e.g. zinc oxide, Rhenomag (available from the company Rhein Chemie);
D.) A filler, e.g. carbon black.
E.) A plasticizer, e.g. Mesamoll (available from the company Bayer);
F.) An antioxidant; e.g. p-phenylenediamine.

The rubber compound according to the invention comprises at least the above-mentioned ingredients A.), B.), C.) and D.) and an additional ingredient, namely an anti-block and slip agent (additive), especially a fatty bisamide. It is preferred to use Finawax as the anti-block and slip additive. Finawax is available from the company Oleofine. It is most preferred to use Finawax-C.

Said anti-block and slip additive, especially said fatty bisamide, prevents the rubber compound of the closing element from sticking to the metal or plastic valve seat. Therefore, the rubber compound has a low sticking level to metal or plastic valve seats. Said anti-block and slip additive blooms out to the surface to a certain degree and due to the polar characteristic of this ingredient there remains an equilibrium between amount inside the material and the layer on the surface. In this way it is a self-repairing protective anti-adhesive layer on the surface. Furthermore, the rubber compound to the invention has a high sealing level in connection with metal or plastic valve seats.

Other additives which can be used in addition to the anti-block and slip agent, namely said fatty bisamide, to reduce stickiness force are: stearic acid (e.g. stearic acid available from the company Henkel), anti-ozonant waxes (e.g. Antilux available from the company Rhein Chemie), and silicone oil.

The reason for sticking is very often a blooming of ingredients causing a sticking force between the valve seat and the closing element. The anti-block and slip agent, especially the fatty bisamide Finawax, does not only eliminate or reduce the sticking force, but improves also the chemical resistance of the valve and reduces blooming of unwanted polar ingredients, like for example plasticizer and antioxidant. This unwanted blooming does practically always take place during the first months of the product life of the rubber valve. It can hold on for example for one year.

The rubber compound according to the invention contains 0,1% to 10,0% of said anti-block and slip additive, especially of said fatty bisamide.

## Claims

1. Rubber compound for a closing element of a gas valve, **characterized by** an anti-block and slip agent, especially a fatty bisamide ingredient.

2. Rubber compound according to Claim 1, **characterized in that** said fatty bisamide is Finawax.

3. Rubber compound according to Claim 1 or 2, **characterized by** the following ingredients:
a.) a base elastomer;
b.) a vulcanisation system;
c.) an activator;
d.) a filler material;
e.) said anti-block and slip additive, especially said fatty bisamide.

4. Rubber compound according to any preceding claims, further comprising a stearic acid.

5. Rubber compound according to any preceding claim, further comprising an anti-ozonant wax.

6. Rubber compound according to any preceding claim, further comprising a silicone oil.

7. Rubber compound according to any preceding claim, **characterized by** an amount of 0,1% to 10,0% of said anti-block and slip additive, especially of said fatty bisamide.

8. Gas valve comprising a closing element acting against a valve seat, whereby said closing element is made of a rubber compound, **characterized in that** said rubber compound comprises an anti-block and slip additive, especially a fatty bisamide ingredient.

9. Gas valve according to Claim 8, **characterized by** a rubber compound according to Claims 2 to 7.
